# EUROPEAN PATENT APPLICATION

(11) **EP 1 691 287 A1**
(43) Date of publication of application: **16.08.2006**
(21) Application number: 05785985.2
(22) Date of filing: 26.09.2005
(51) Int. Cl.: G06F 9/48

(54) **INFORMATION PROCESSING DEVICE, PROCESS CONTROL METHOD, AND COMPUTER PROGRAM**

(30) Priority: 29.09.2004 JP 2004283530
(71) Applicant: SONY CORPORATION, Tokyo 141-0001 (JP)
(72) Inventor: YOKOTA, Daisuke c/o SONY COMPUTER ENTERTAINMENT, Tokyo, 1070062 (JP)
(74) Representative: Leppard, Andrew John
(86) International application number: PCT/JP2005/017647
(87) International publication number: WO 2006/035729

(57) **Abstract**

A method and apparatus for improving data processing efficiency with an improved context storage mechanism are provided. In an arrangement where data processing is performed with a plurality of logical processors are allocated to a physical process in a time sharing manner, a context table of a logical processor with the physical processor unapplied thereto is mapped to a logical partition address space of a logical partition to which the logical processor is applied to. The context table is then stored. When the logical processor is not allocated to the physical process, the content of the logical processor can be acquired. Processes such as accessing to the logical processor and program loading are executed without the need for waiting for timing of allocating the logical processor to the physical processor. Data processing efficiency is thus improved.

## Description

### Technical Field

The present invention relates to an information processing apparatus, a process control method, and a computer program. More specifically, the present invention relates to an information processing apparatus, a process control method, and a computer program for improving accessibility to resources of a plurality of logical processors and for performing efficient data processing in an arrangement where the plurality of logical processors share resources in the information processing apparatus.

### Background Art

In a multi operating system (OS) having a plurality of OS's in a single system, each OS can execute respective process and hardware common to the system, such as a CPU and a memory is successively switched in time sequence.

Scheduling of processes (tasks) of a plurality of OS's is executed by a partition management software program, for example. If an OS(α) and an OS(β) coexist in a single system with the process of OS(α) being a partition A and the process of OS(β) being a partition B, the partition management software program determines the scheduling of the partition A and the partition B, and executes the process of the OS's with the hardware resources allocated based on the determined scheduling.

Patent Document 1 discloses a task management technique of a multi OS system. According to the disclosure, tasks to be executed by a plurality of OS's are scheduled with a priority placed on a process having urgency.

An entity processing data is set up as a partition. More specifically, a logical partition is set up as an entity that shares resources in a system. A variety of resources such as use time of the physical processor, virtual address space, and memory space are allocated to the logical partition. The process is then performed using the allocated resources. A logical processor corresponding to any physical processor is set up in the logical partition, and data processing is performed based on the logical processor. The logical processor does not always correspond to the physical processor on one-to-one correspondence. For example, a single logical processor can correspond to a plurality of physical processors, and a plurality of logical processors can correspond to a single physical processor.

If a plurality of processes are performed in parallel using the logical processor, the physical processor is used by scheduling the plurality of logical processors. More specifically, the plurality of logical processors uses the physical processor in a time sharing manner.

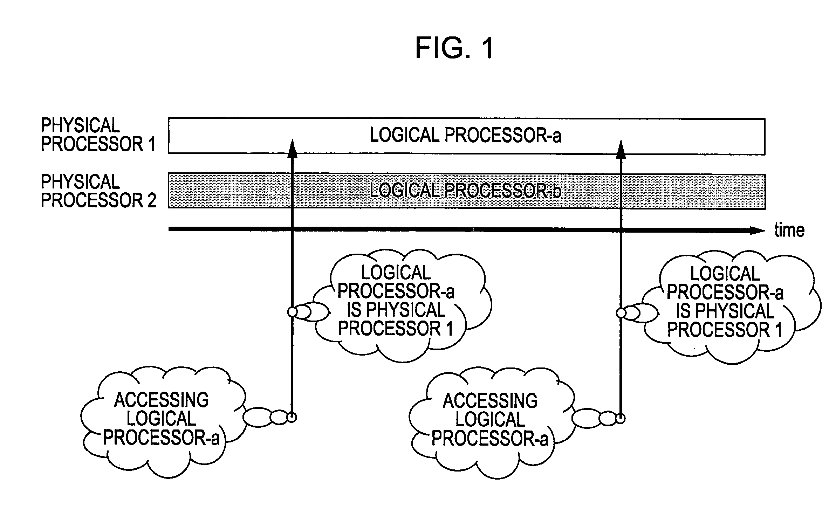

A single logical processor is now allocated to a single physical processor as shown in Fig. 1, in other words, a logical processor (a) exclusively uses a physical processor (1) and a logical processor (b) exclusively uses a physical processor (2). An access process of the logical processor (a) is now discussed.

An OS corresponding to a logical partition having the logical processor (a) set up therewithin now attempts to access the logical processor (a). A local storage area of the physical processor (1) held by the logical processor (a) is mapped to an address space of the logical partition corresponding to the logical processor (a) as an area corresponding to the physical processor (1). The OS corresponding to the logical partition can always access the logical processor (a). By accessing the logical processor (a), the OS can acquire a variety of information including local storage information corresponding to the logical processor (a).

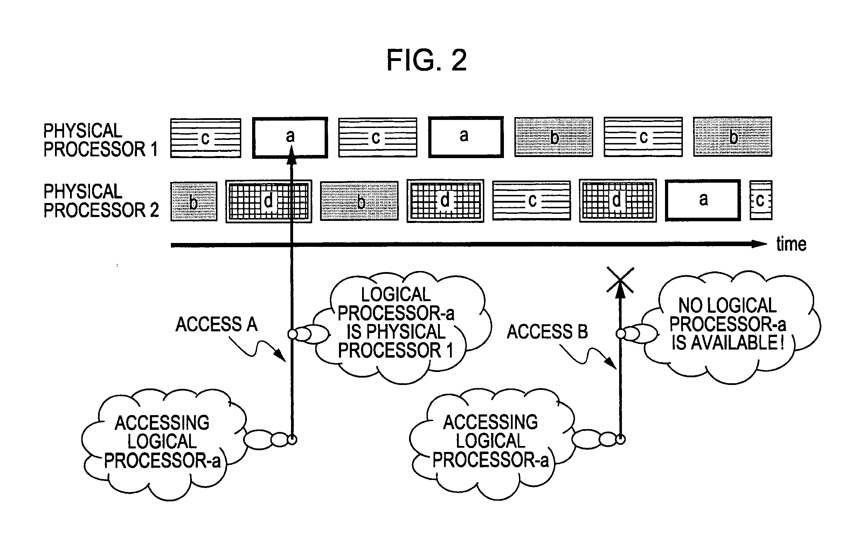

A plurality of logical processors are now allocated to a single physical processor to perform processes in a time sharing manner as shown in Fig. 2. An OS corresponding to a logical partition can access the logical processor (a) in the same manner as described above at an access A at timing the logical processor (a) uses the physical processor (1). However, at an access B at timing the logical processor (a) does not use the physical processor (1), the logical processor (a) uses no physical processor. Information relating to a local storage corresponding to a physical processor is not mapped to the address space of a logical partition corresponding to the logical processor (a). The OS cannot access the logical processor (a). In this case, the OS must wait until the logical processor (a) can uses a physical processor in a time sharing manner. Data processing is thus subject to delay.
[Patent Document 1] Japanese Unexamined Patent Application Publication No. 2003-345612

### Disclosure of Invention

### [Problems to Be Solved by the Invention]

It is an object of the present invention to provide an information processing apparatus, a process control method, and a computer program for improving accessibility to resources of a plurality of logical processors and for performing efficient data processing in an arrangement where the plurality of logical processors share resources in the information processing apparatus.

### [Means for Solving the Problems]

In accordance with a first aspect of the present invention, an information processing apparatus for processing data by allocating a plurality of logical processors to a physical processor in a time sharing manner, includes a context management unit mapping a context of a logical processor with no physical processor allocated thereto, to a logical partition address space of a logical partition to which the logical processor is applied, and then storing the context of the logical processor.

The information processing apparatus of one embodiment of the present invention includes a control OS allocating the plurality of logical processors to the physical processor in a time sharing manner, and a guest OS with the logical partition associated therewith, and with the logical processor being applied to the logical partition. The control OS maps the context of the logical processor, which is applied to the guest OS associated logical partition, to a logical partition address space of the guest OS associated logical partition and then stores the context of the logical processor, based on a system call from the guest OS to the control OS.

In the information processing apparatus of one embodiment of the present invention, the control OS excludes the logical processor, which is applied to the guest OS associated logical partition, from the time sharing process as an allocation candidate to the physical processor based on the system call from the guest OS to the control OS, maps the context of the logical processor to the logical partition address space, and then stores the context of the logical processor.

In the information processing apparatus of one embodiment of the present invention, the control OS switches between an active state for allocating the logical processor to the physical processor and an inactive state for not allocating the logical processor to the physical processor and based on the system call from the guest OS to the control OS, the control OS sets the guest OS applied logical processor to be in the inactive state, maps the context of the logical processor to the logical partition address space, and then stores the context of the logical processor.

In the information processing apparatus of one embodiment of the present invention, the control OS restores the logical processor back to an allocation candidate to be allocated to the physical processor by resetting the guest OS applied logical processor to the active state from the inactive state based on the system call from the guest OS to the control OS.

In the information processing apparatus of one embodiment of the present invention, the context management unit performs storage of the context of the logical processor based on at least one of a register of the logical processor, an I/O port, and a local storage.

In accordance with a second aspect of the present invention, a process control method for processing data by allocating a plurality of logical processors to a physical processor in a time sharing manner, includes a logical processor scheduling step of excluding a logical processor from an allocation candidate to be allocated to the physical processor and a context storage step of mapping a context of the logical processor, excluded as a candidate to be allocated to the physical processor, to a logical partition address space of a logical partition to which the logical processor is applied, and then storing the context of the logical processor.

The process control method of one embodiment of the present invention further includes a system call output step of outputting a system call from the guest OS to the control OS, wherein the logical processor scheduling step includes excluding the logical processor as an allocation candidate to be allocated to the physical processor based on the system call, and wherein the context storage step includes mapping the context of the logical processor, which is applied to the logical partition with the guest OS associated therewith, based on the system call, to the logical partition address space with the guest OS associated therewith, and then storing the context of the logical processor.

In the process control method of one embodiment of the present invention, the control OS switches between an active state for allocating the logical processor to the physical processor and an inactive state for not allocating the logical processor to the physical processor and based on the system call from the guest OS to the control OS, the control OS sets the guest OS applied logical processor to be in the inactive state, maps the context of the logical processor to the logical partition address space, and then stores the context of the logical processor.

In the process control method of one embodiment of the present invention, the control OS restores the logical processor back to an allocation candidate to be allocated to the physical processor by resetting the guest OS applied logical processor to the active state from the inactive state based on the system call from the guest OS to the control OS.

In accordance with a third aspect of the present invention, a computer program for performing a process control method of processing data by allocating a plurality of logical processors to a physical processor in a time sharing manner, includes a logical processor scheduling step of excluding a logical processor from an allocation candidate to be allocated to the physical processor and a context storage step of mapping a context of the logical processor, excluded as a candidate to be allocated to the physical processor, to a logical partition address space of a logical partition to which the logical processor is applied, and then storing the context of the logical processor.

The computer program of one embodiment of the present invention is provided, to a general-purpose computer system executing a variety of program code, in a computer-readable storage medium, such as a CD, an FD, or an MO, or a communication medium such as network. By providing the computer program in a computer readable manner, the computer system performs process responsive to the computer program.

These and other features, and advantages of the present invention will become obvious from the following description of the present invention and the accompanying drawings. In the context of the description of the present invention, the system refers to a logical set of a plurality of apparatuses, and is not limited to an apparatus that houses elements within the same casing.

### [Advantages]

In accordance with embodiments of the present invention, the information processing apparatus processes data by allocating the plurality of logical processors to the physical processor in a time sharing manner, and stores the context of the logical processor with no physical processor allocated thereto, the context mapped to a logical partition address space of the logical partition to which the logical processor is applied. The context of the logical processor can be acquired, even with the logical processor not allocated to the physical processor. Processes to the logical processor, including accessing and program loading, can be executed without waiting until the logical processor is allocated to the physical processor. Data processing efficiency is thus substantially increased.

In accordance with embodiments of the present invention, in addition to the content of registers, a context table stores contents, not stored in a known context table, such as contents of a local storage area and an input-output port. The guest OS references the content of the register, the content of the local storage, and the content of the input-output port as a variety of information corresponding to the logical processor set in the inactive state corresponding to the physical processor in a non-usable state. The guest OS thus processes data in accordance with resource access responsive to the information. The data processing efficiency is thus heightened.

### Brief Description of the Drawings

Fig. 1 illustrates an allocation process of a logical processor and a physical processor in a time sharing manner.
Fig. 2 illustrates an allocation process of the logical processor and the physical processor in a time sharing manner.
Fig. 3 illustrates the structure of an information processing apparatus of the present invention.
Fig. 4 illustrates the structure of a processor module in the information processing apparatus.
Fig. 5 illustrates the system configuration of OS's in the information processing apparatus of the present invention.
Fig. 6 illustrates an allocation process between the logical processor and the physical processor.
Fig. 7 illustrates an area referenced by a guest OS and a setting of a context table of the present invention.
Fig. 8 illustrates a logical partition address space with the guest OS associated therewith and information referenced by the guest OS.
Fig. 9 illustrates processes performed by the guest OS and the control OS in accordance with one embodiment of the present invention.
Fig. 10 is a flowchart of a process sequence executed by the guest OS and the control OS in accordance with the present invention.
Fig. 11 illustrates the allocation process between the logical processor and the physical processor in a time sharing manner and a contest setting process in accordance with the present invention.
Fig. 12 illustrates the allocation process between the logical processor and the physical processor in a time sharing manner, a contest setting process, and a program loading process in accordance with the present invention.

### Best Mode for Carrying Out the Invention

Referring to the drawings, an information processing apparatus, a process control method, and a computer program of the present invention are described below.

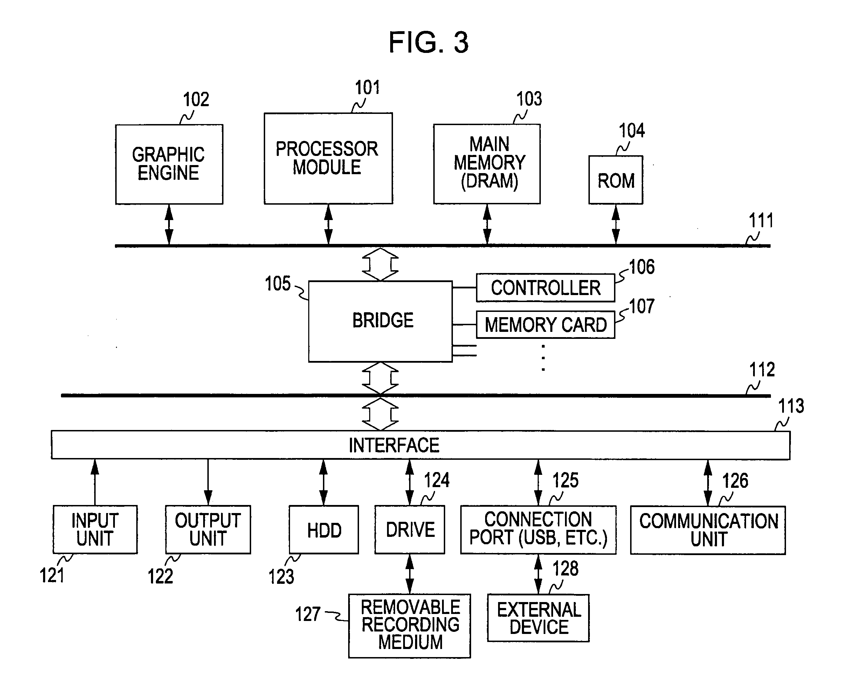

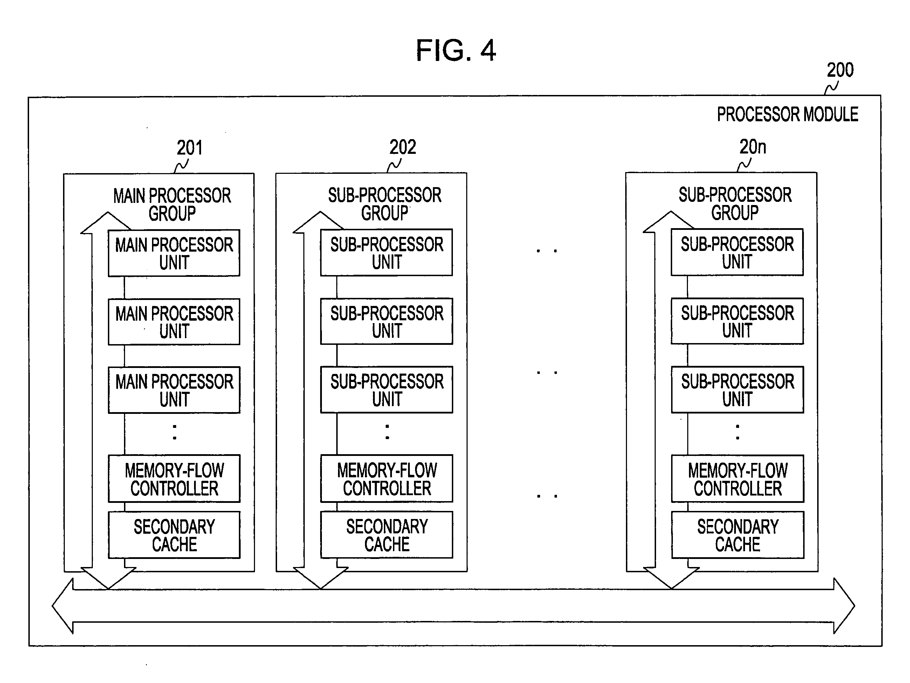

The hardware structure of the information processing apparatus of the present invention is described below with reference to Fig. 3. A processor module 101 includes a plurality of processing units, and processes data in accordance with a variety of programs stored in a ROM (read-only memory) 104 and an HDD 123, including OS and application programs running on the OS. The processor module 101 will be described later with reference to Fig. 4.

In response to a command input via the processor module 101, a graphic engine 102 generates data to be displayed on a screen of a display forming an output unit 122, for example, performs a 3D graphic drawing process. A main memory (DRAM) 103 stores the program executed by the processor module 101 and parameters that vary in the course of execution of the program. These elements are interconnected via a host bus 111 including a CPU bus.

The host bus 111 is connected to an external bus 112, such as a peripheral component interconnect/interface (PCI) bus via a bridge 105. The bridge 105 controls data inputting and outputting between the host bus 111, the external bus 112, a controller 106, a memory card 107, and other devices.

An input unit 121 inputs information to an input device, such as a keyboard and a pointing device, operated by a user. An output unit 122 includes an image output unit, such as one of a liquid-crystal display and a CRT (cathode ray tube), and an audio output device such as a loudspeaker.

The HDD (hard disk drive) 123 drives a hard disk loaded therewithin, thereby recording or playing back information and a program to be executed by the processor module 101.

A drive 124 reads data and programs stored in a loaded removable recording medium 127, such as a magnetic disk, an optical disk, a magneto-optic disk, a semiconductor memory, and supplies the data and the programs to a main memory (DRAM) 103 via an interface 113, the external bus 112, the bridge 105, and the host bus 111.

A connection port 125 connects to an external device 128, and may include a USB, an IEEE 1394 bus, or the like. The connection port 125 is connected to the processor module 101 via the interface 113, the external bus 112, the bridge 105, and the host bus 111. A communication unit 126, connected to a network, transmits data supplied from the HDD 123 or the like, and receives data from the outside.

The structure of the processor module 101 is described below with reference to Fig. 4. As shown, a processor module 200 includes a main processor group 201 including a plurality of main processor units, and a plurality of sub-processor groups 202-20n, each including a plurality of sub-processor units. Each group further includes a memory controller and a secondary cache. The processor groups 201-20n, each including eight processor units, for example, are connected via one of a cross-bar architecture and a packet exchange network. In response to a command of the main processor of the main processor group 201, at least one sub-processor in the plurality of sub-processor groups 202-20n is selected to perform a predetermined program.

The information processing apparatus of the present invention includes a plurality of physical processors, and a software program multiplexes the physical processors in a time sharing manner, and provides the OS with logical processors. A control OS controlling the sub-processor runs on the main processor. The method of one embodiment of the present invention is applicable to an multi-processor machine free from a master-slave relationship, such as a main processor to sub-processor relationship.

The memory-flow controller in each processor group controls data inputting and data outputting to the main memory 103 of Fig. 3. The secondary cache serves as a memory area for process data in each processor group.

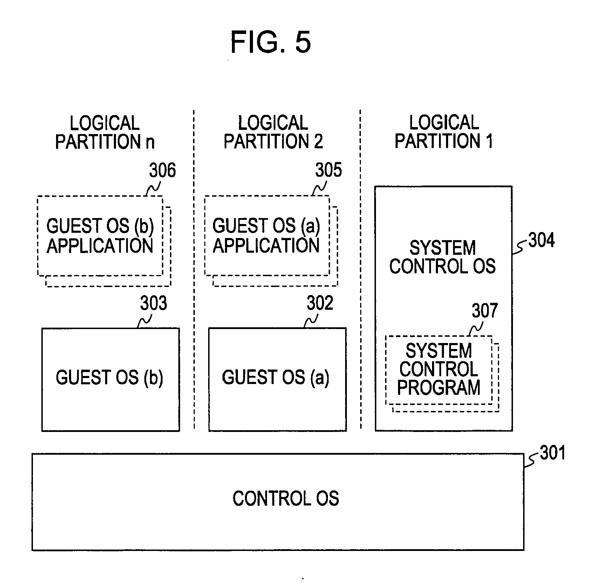

The system configuration of operating systems (OS's) in the information processing apparatus of the present invention is described below with reference to Fig. 5. The information processing apparatus has a multi-OS structure in which a plurality of OS's are present. As shown in Fig. 5, the information processing apparatus includes the plurality of OS's in a logical layer structure.

As shown in Fig. 5, a control OS 301 is arranged at a lower layer. A plurality of guest OS's 302, 303, and 304 are arranged at upper layers. Together with a system control OS 304, the control OS 301 forms a logical partition as an execution unit of each process executed by the processor module 101 discussed with reference to Figs. 3 and 4, and allocates system hardware resources (for example, main processors, sub-processors, memories, and devices, as computing resources) to each logical partition.

The guest OS's 302 and 303 are a gaming OS, Windows (registered trademark), Linux (registered trademark), etc, and operate under the control of the control OS 301. Although only two guest OS's 302 and 303 are shown in Fig. 5, the number of guest OS's is not limited to any particular number.

The guest OS's 302 and 303 operate within the logical partitions set by the control OS 301 and the system control OS 304. The guest OS's 302 and 303 process a variety of data using hardware resources such as main processors, sub-processors, memories, and device, each allocated to the logical partition.

The guest OS(a) 302 uses the hardware devices including a main processor, a sub-processor, a memory, and a device allocated to the logical partition 2 set up by the control OS 301 and the system control OS 304, thereby executing an application program 305 corresponding to the guest OS(a) 302. The guest OS(b) 303 uses the hardware resources including a main processor, a sub-processor, a memory, and a device allocated to a logical partition n, thereby executing an application program 306 corresponding to the guest OS(b) 303. The control OS 301 provides a guest OS programming interface required to execute the guest OS.

The system control OS 304 generates a system control program 307 containing a logical partition management program, and performs operation control responsive to the system control program 307 together with the control OS 301. The system control program 307 controls system policy using a system control program programming interface. The system control OS 304 is supplied with the system control program programming interface by the control OS 301. For example, the system control program 307 permits flexible customization, for example, setting an upper limit on resource allocation.

The system control program 307 controls the behavior of the system using the system control program programming interface. For example, the system control program 307 produces a new logical partition, and starts up a new guest OS at the logical partition. In a system where a plurality of guest OS's are operating, the guest OS's are initiated in the order programmed in the system control program 307. The system control program 307 can receive and examine a resource allocation request issued from the guest OS before being received by the control OS 301, modify the system policy, and even deny the request itself. In this way, no particular guest OS monopolizes the resources. A program into which the system policy is implemented is the system control program.

The control OS 301 allocates a particular logical partition (for example, the logical partition 1 as shown in Fig. 5) to the system control OS 304. The control OS 301 operates in a hypervisor mode. The guest OS operates in a supervisor mode. The system control OS 304 and the application program operate in a problem mode (user mode).

The logical partition is an entity receiving a resource allocation in the system. For example, the main memory 103 is partitioned into several areas (see Fig. 3), and each logical partition is granted the right to use the respective area. The types of resources allocated to the logical partitions are listed below.
a) Physical processor unit usage time
b) Virtual address space
c) Memory accessible by program operating in a logical partition
d) Memory used by the control OS to manage the logical partition
e) Event port
f) Right to use device
g) Cache partition
h) Right to use bus

As previously discussed, the guest OS operates within the logical partition. The guest OS monopolizes the resources allocated to the logical partition to process a variety of data. In many cases, one partition is produced for a guest OS, on a per guest OS basis, functioning on the system. Each logical partition is assigned a unique identifier. The system control OS 304 manages the system control program generated as logical partition management information by associating the system control program to the identifier.

The logical partition is generated by the control OS 301 and the system control OS 304. Immediately after production, the logical partition has no resources, and with no limitation set on available resources. The logical partition takes one of two states, an active state and an end state. The logical partition immediately after production takes an active state. The logical partition is transitioned into the end state in response to a request of a guest OS operating in the logical partition, and stops all logical processors allocated to the logical partition.

The logical processor is the one allocated to the logical partition, and corresponds to any physical processor, namely, a processor within a processor group of Fig. 4. The logical processor and the physical processor are not always related to each other in one-to-one correspondence. A single logical processor can correspond to a plurality of physical processors. Alternatively, a plurality of logical processors can correspond to a single physical processor. The correspondence between the logical processor and the physical processor is determined by the control OS 301.

The control OS 301 has a function to limit the amount of resources available to each logical partition. Limitation can be set to the amount of use of resources the guest OS(a) 302 and the guest OS(b) 303 can allocate and release without communicating with the system control OS 304.

The logical partition has a control signal port. A variety of control signals required for data exchanging and data sharing between logical partitions reaches the control signal port. The control signals are listed below.
a) Request to connect event ports between logical partitions
b) Request to connect message channels between logical partitions
c) Request to connect to shared memory

Control signals reaching each logical partition are queued at the control signal port. No limit is applied to the depth of the queue within a range permitted by a memory resource. A memory resource required for queuing is reserved in the logical partition having transmitted the control signal. The guest OS programming interface is called to receive the control signal from the port. When a control signal reaches an empty control signal port, an event can be transmitted to any event port. An event port can be specified by calling the guest OS programming interface.

The control OS provides the logical partition with a logical sub-processor in an abstract form of a physical sub-processor as a computing resource. As previously discussed, the physical sub-processor is not related to the logical sub-processor in one-to-one correspondence, and it is not a requirement that the physical sub-processors be identical in number to the logical sub-processors. As necessary, the control OS can thus cause a single physical sub-processor to correspond to a plurality of logical sub-processors.

If the number of the logical sub-processors is larger than the number of physical sub-processors, the control OS uses the physical sub-processors in a time sharing manner. The logical sub-processor can repeatedly stop and then resume operation. The guest OS can monitor such changes.

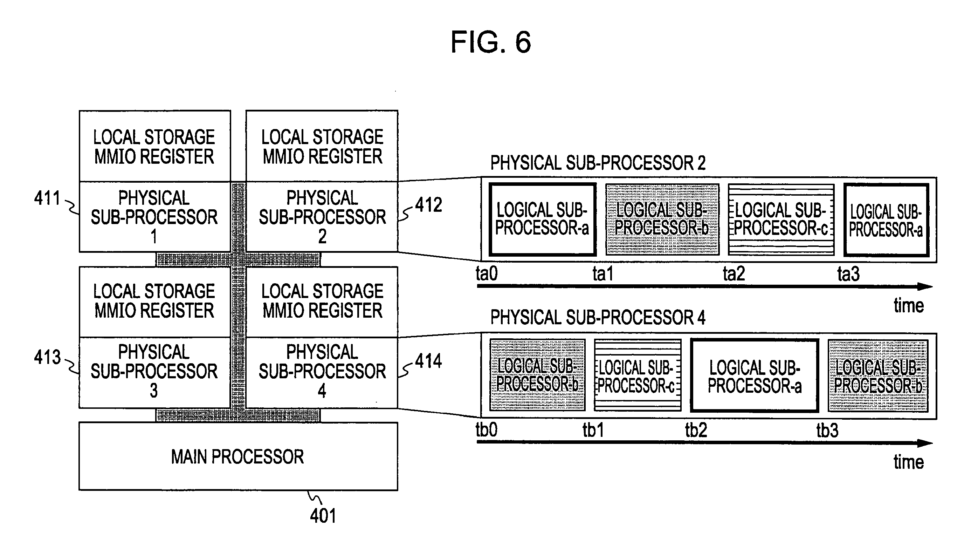

As shown in Fig. 6, the correspondence between the physical processor and the logical processor is described below. Fig. 6 illustrates the structure of a single main processor 401, and physical sub-processors 411-414, and a time sequence of a physical sub-processor (2) and a physical sub-processor (4) operating in a time sharing manner.

As shown in Fig. 6, logical sub-processors are allocated to the physical sub-processor (2) in a time sharing as listed below.
Time slot ta0 - ta1: logical sub-processor (a)
Time slot ta1 - ta2: logical sub-processor (b)
Time slot ta2 - ta3: logical sub-processor (c)
Time slot ta3 - : logical sub-processor (a)
In each allocation time slot, each logical sub-processor performs a process using the physical sub-processor (2).

The physical sub-processor (4) is shared by the logical sub-processors as listed below.
Time slot tb0 - tb1: logical sub-processor (b)
Time slot tb1 - tb2: logical sub-processor (c)
Time slot tb2 - tb3: logical sub-processor (a)
Time slot tb3 - : logical sub-processor (b)
In each allocation time slot, each logical sub-processor performs a process using the physical sub-processor (4).

The logical sub-processors time share the physical processors to perform respective processes. To resume data processing operation with the physical processor during a next allocation time slot, each logical sub-processor needs to hold status information, such as hardware state during a data process suspension time. The status information contains the content of a local storage of the physical processor, the content of an I/O port, and the content of a register.

While the logical sub-processor is allocated to the physical processor, a portion of the I/O port and a local storage area of the physical processor accounting for the state of the logical sub-processor are mapped to an area in a logical partition address space corresponding to the logical sub-processor and accessing via another processor can be performed. For example, a guest OS having a logical partition with the logical sub-processor allocated thereto can access via another processor.

While the logical sub-processor is not allocated to the physical processor, a portion of the I/O port and a local storage area of the physical processor accounting for the state of the logical sub-processor are not mapped to an area in a logical partition address space corresponding to the logical sub-processor, accessing to the logical sub-processor is typically impossible as previously discussed with reference to Fig. 2. In accordance with the present invention, however, a context table containing an area of the I/O port and the local storage area information can be referenced by another processor in order to allow accessing to the logical processor while the logical processor does not use the physical processor.

The structure of a stored context is described below. In the discussion that follows, the logical partition allocated to the guest OS discussed with reference to Fig. 5 executes data processing using the logical sub-processor. The control OS allocates the logical sub-processor corresponding to the logical partition to the physical processor in a time sharing manner.

The logical sub-processor takes one of two states of an active state / an inactive state under the control of the guest OS and one of two states of an operating state / a usable state under the control of the control OS. The logical sub-processor thus takes one of the following three states in combination:
a) active state and usable state,
b) active state and operating state, and
c) inactive state.

The difference between the active - state and the inactive state depends on whether the logical sub-processor can be an allocation target to be allocated to the physical processor in a time sharing manner by the control OS. In the active state, the logical sub-processor time shares the physical processor, in other words, is an allocation target to be allocated to the physical processor. When the logical sub-processor is in the active state, the control OS appropriately allocates the logical sub-processor to the time-shared physical processor.

During the inactive state, the logical sub-processor does not time-share the physical processor. When the logical sub-processor is in the inactive state, the control OS does not allocate the logical sub-processor to the time-shared physical processor. The context of the logical sub-processor is held in the context table. Since the control OS maps the context to the logical partition address space, another processor can access the logical sub-processor in the inactive state. The guest OS can control the logical sub-processor as to whether to be in the active state or the inactive state.

The difference between the operating state and the usable state depends on whether the logical sub-processor in the active state is actually executed by the physical processor. If the number of logical sub-processors is greater than the number of physical processors, the logical sub-processor is implemented by the time-shared physical processor as previously discussed with reference to Fig. 2. The logical sub-processor is not always executed by the physical processor. The operating state indicates an instant moment the logical sub-processor is actually executed by the physical processor.

During the usable state, the logical sub-processor becomes a target to be allocated to the physical processor (in the active state), but is not actually performed by the physical processor.

A transition between the operating state and the usable state is generated by a context switch of the logical sub-processor produced by the control OS. The guest OS can learn the state of the logical sub-processor as to whether the logical sub-processor is in the operating state or the usable state.

With the logical sub-processor in both the active state and the operating state, the I/O port area and the local storage area of the physical processor accounting for the state of the-logical sub-processor are mapped to the area of the logical partition address space. Accessing to the logical sub-processor becomes possible.

In the information processing apparatus of the present invention, when the logical sub-processor transitions to the inactive state, the control OS stores the context of the logical sub-processor as status information of the logical sub-processor and maps the context table to the area of the logical partition address space of the guest OS corresponding to the logical sub-processor. With this process, the guest OS can reference, from own logical partition address space, resource information of the context table of the logical sub-processor in the inactive state. The guest OS can thus read, write, and update the resource information.

In addition to the content of the register, the context table also stores, contents, not contained in the known context table, such as the content of the local storage and the content of I/O port. As a result, the guest OS can process data by accessing resources in accordance with a variety of status information corresponding to the logical processor set in the inactive state with the physical processor not operating. Data processing efficiency is thus increased.

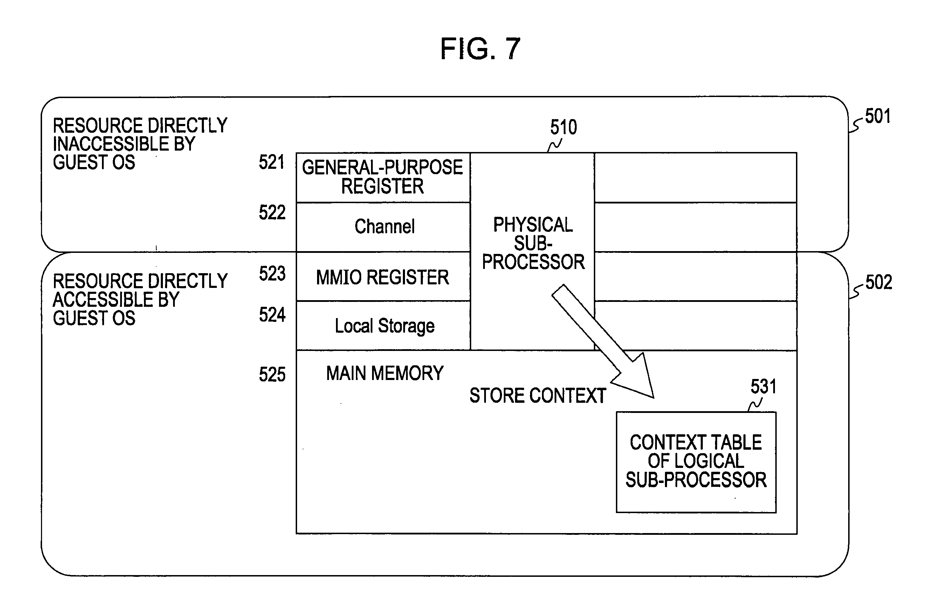

The resource access process of the guest OS to the resource associated to the logical sub-processor is described below with reference to Fig. 7. The logical partition is set in the guest OS and the logical sub-processor is associated with the logical partition. The resource is divided into a guest OS inaccessible resource 501 and a guest OS accessible resource 502.

If the logical sub-processor applied to the guest OS associated logical partition is in the active state and the operating state, a physical sub-processor 510 is operating to process data. Data processing is performed using a general-purpose register 521 and a portion 522 of an I/O port contained in the guest OS inaccessible resource 501, and a portion 523 of the I/O port, a local storage 524, and a main memory 525 contained in the guest OS accessible resource 502.

While the physical processor is in a data processing operation state, the portion 523 of the I/O port, the local storage 524, etc. are mapped to the logical partition address space of the guest OS. The guest OS can access these resources.

When the logical sub-processor shifts into the inactive state, namely, becomes out of a candidate to be allocated to the physical processor, the corresponding context is stored in a context table 531 in the main memory 525 of the logical sub-processor.

Since the context table 531 of the logical sub-processor stored in the main memory 525 is mapped to an area in the logical partition address space of the guest OS corresponding to the logical sub-processor, the guest OS can access the context table 531.

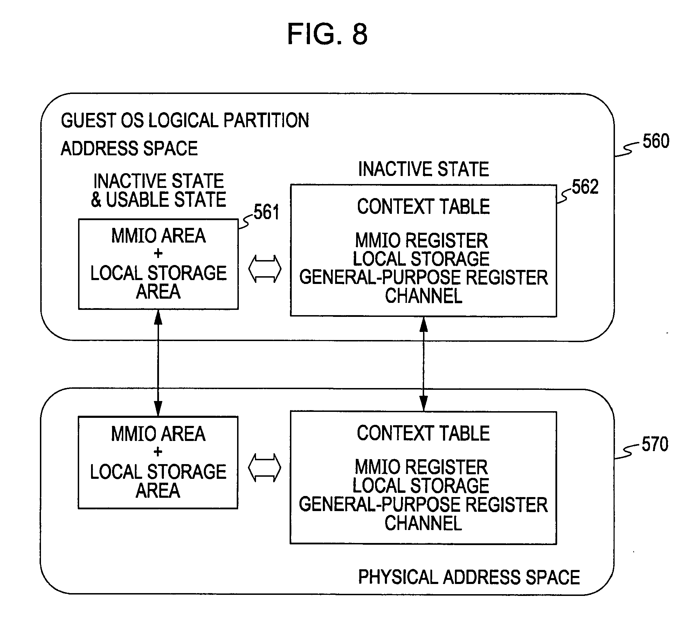

The correspondence between a logical partition address space of the guest OS corresponding to the logical processor and a physical address space is described below with reference to Fig. 8.

Fig. 8 illustrates the logical partition address space 560 of the guest OS corresponding to the logical sub-processor and the physical address space 570. The physical address space 570 is a physical space corresponding to the main memory. The guest OS can access only the physical address space mapped to the logical partition address space of the guest OS.

If the logical sub-processor applied to the guest OS associated logical partition is in the active state and the operating state, in other words, if the physical sub-processor is in the data processing operation state, an area of the I/O port and a local storage area 561 are mapped to the logical partition address space 560 of the guest OS. The guest OS can access these resources.

If the logical sub-processor applied to the guest OS associated logical partition is in the inactive state, in other words, if the logical sub-processor becomes out of a candidate to be allocated to the physical processor, a context table 562 containing the portion of the I/O port, the local storage area, and the area of related I/O port not contained I/O port, and the register is mapped to the logical partition address space 560 of the guest OS. The guest OS can thus access these resources.

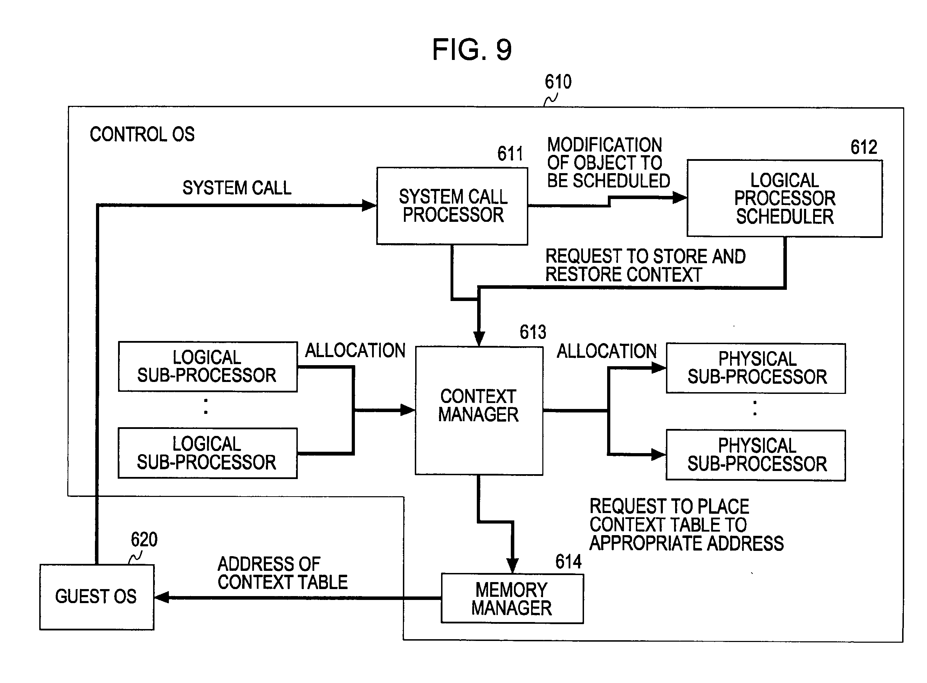

A context storage process is described below in detail with reference to Fig. 9. Fig. 9 illustrates a control OS 610 executing the context storage process and a guest OS 620 having a logical partition at which the logical processor corresponding to the context to be stored performs data processing.

As previously discussed with reference to Fig. 8, the context is stored in a manner that allows the guest OS to reference the context when the logical sub-processor is in the inactive state, in other words, when the logical sub-processor becomes out of a candidate to be allocated to the physical processor.

As shown in Fig. 9, the guest OS 620 outputs a system call requesting a system call processor 611 in the control OS 610 to perform a storage process to store the context to a location readable from the guest OS 620. Upon receiving the system call from the guest OS 620, the system call processor 611 in the control OS 610 outputs a scheduling update request of the logical sub-processor to a logical processor scheduler 612, and requests a context manager to store the context of the logical processor.

In response, the system call processor 611 shifts the logical sub-processor from the active state to the inactive state. More specifically, the system call processor 611 excludes the logical sub-processor corresponding to the logical partition set in the guest OS 620 out of an allocation candidate to the physical processor. The logical sub-processor then shifts into the inactive state.

The logical processor scheduler 612 requests the context manager 613 to store the context corresponding to the logical sub-processor shifted in the inactive state. Upon receiving the request to store and restore the context of the logical sub-processor from the logical processor scheduler 612, the context manager 613 executes the context storage and restoration. After checking that the logical sub-processor is in the inactive state, the context manager 613 requests a main memory manager 614 to map the context table having stored the context to the logical partition address space. The context to be stored contains the content of the local storage of the logical sub-processor, the content of the I/O port, and the content of the register.

The main memory manager 614 maps the context to be stored in the main memory as a physical address space to the logical partition address space of the guest OS 620 in a manner that permits the guest OS 620 to reference the context. The main memory manager 614 notifies the guest OS 620 of a context access address in the logical partition address space of the guest OS 620.

In response to the notified address, the guest OS 620 can directly reference the context. The guest OS 620 can acquire the resources based on the context. The resources contain the area of the I/O port and the local storage area, and the content of the register, each directly accessible by the main processor and the content of the I/O port not directly accessible by the main processor. The guest OS 620 thus reads and writes these pieces of resource information.

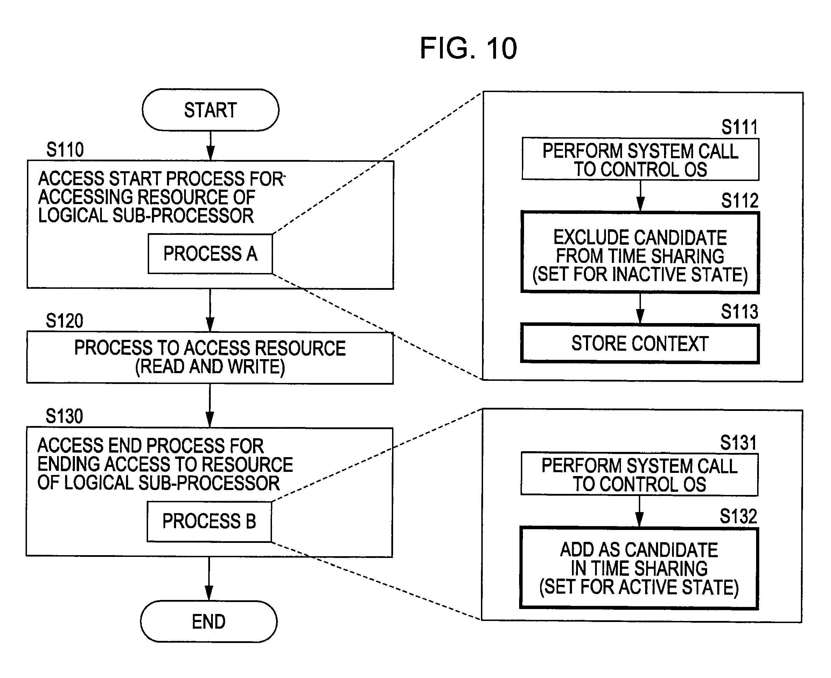

A context storage process and a resource access process using a stored context are described below with reference to Fig. 10.

As shown in Fig. 10, the guest OS performs a resource access process based on the context mapped to the logical partition address space by setting the logical sub-processor from the active state to the inactive state, and then restoring the logical sub-processor to the active state.

In step S110, the guest OS starts the resource access process of the logical sub-processor. The logical partition is set in the guest OS, and the resource access process is performed to the logical sub-processor corresponding to the set logical partition.

The process in step S110 includes steps S111 through S113 on the right-hand portion of Fig. 10. In step S111, the guest OS executes a system call to the control OS. In the system call, the guest OS requests the control OS to identify the logical sub-processor and to store the context of the logical sub-processor to a location referenced by the guest OS.

The control OS executes steps S112, and S113 in response to the system call from the guest OS. As shown in Fig. 10, steps S112, S113, and S132 enclosed in heavy-lined boxes are performed by the control OS.

In step S112, the control OS excludes the logical sub-processor requested by the guest OS as a time sharing target. More specifically, the logical sub-processor is excluded from a candidate to be allocated to the physical processor and then set to be in the inactive state. In step S113, the context of the sub-processor is stored. The context to be stored is mapped to the logical partition address space of the guest OS in a manner that allows the context to be referenced by the guest OS. The context to be stored contains the content of the I/O port, the content of the local storage, and the content of the register.

In step S120, the guest OS accesses the context from own logical partition address space, thereby performing the resource access process including -acquiring and rewriting context information.

Upon completing the resource access, the guest OS executes a resource access end process of the logical sub-processor in step S130.

The process in step S130 includes step S131 through S132 shown on the right-hand portion of Fig. 10. In step S131, the guest OS executes a system call to the control OS. In the system call, the guest OS requests the control OS to identify the logical sub-processor and to set the logical sub-processor as a candidate for time sharing, namely, to shift the logical sub-processor from the inactive state to the active state.

Upon receiving the system call from the guest OS, the control OS restores the logical sub-processor requested by the guest OS back to a candidate for time sharing. More specifically, the logical sub-processor is reset as a candidate to be allocated to the physical processor and is shifted to the active state.

The logical sub-processor is thus restored back to the active state as a candidate to be allocated to the physical processor. In accordance with time sharing scheduling, data processing is performed using the physical processor.

In accordance with the present invention, the context in the logical sub-processor that does not perform data processing using the physical processor can be referenced. Accessing to the resource of the logical sub-processor is efficiently performed. This arrangement eliminates the need for waiting for the resource access until the logical sub-processor is allocated to the physical processor. Data processing is efficiently performed.

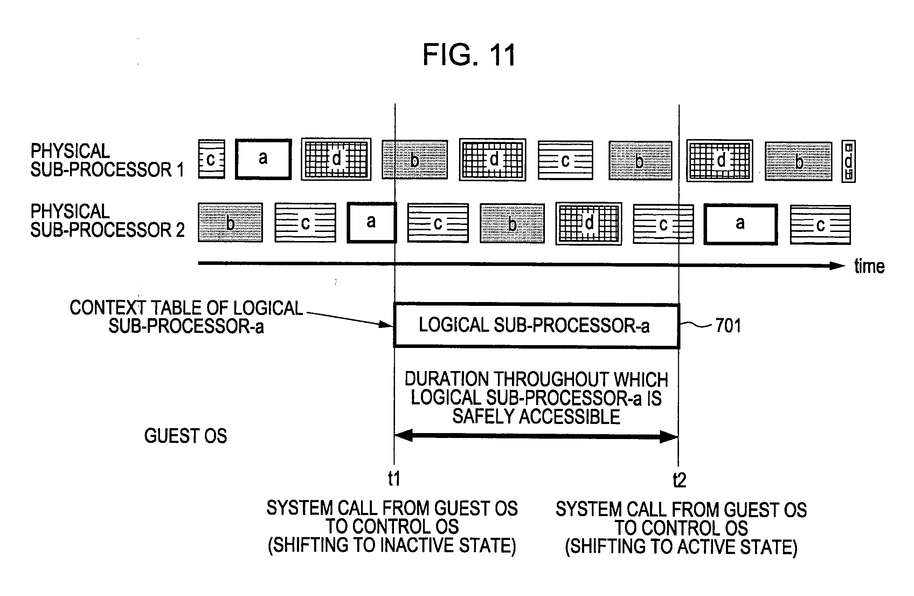

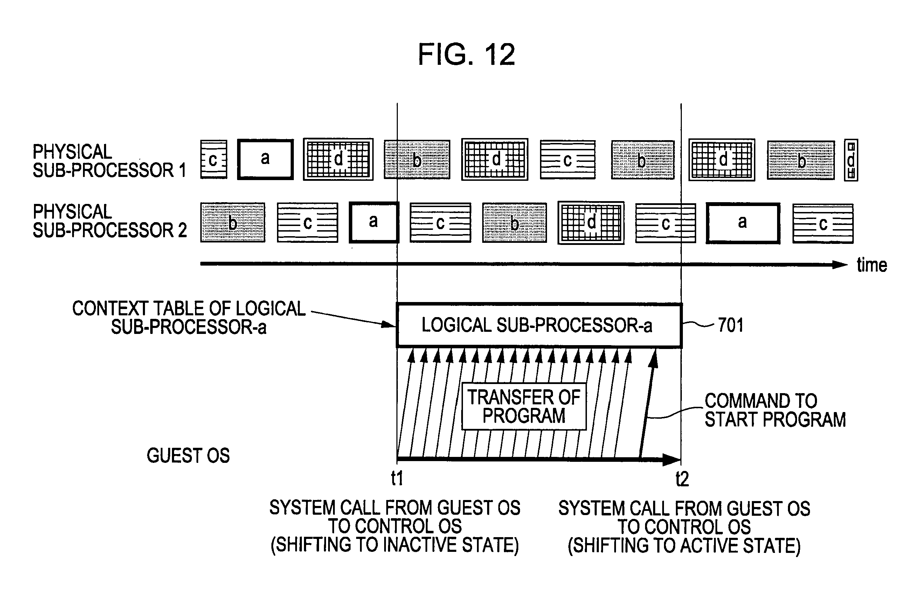

Processes using the context of the logical sub-processor in the inactive state are described below with reference to Figs. 11 and 12.

When a plurality of processes using logical sub-processors are performed in parallel, the physical processor is scheduled by a plurality of logical sub-processors. More specifically, the plurality of logical sub-processors use the physical processor in a time sharing manner.

As shown in Fig. 11, logical sub-processors (a)-(d) are allocated to two physical processors 1 and 2 to perform processes in a time sharing manner. If accessing to the logical sub-processor (a) compatible with the guest OS is performed, the logical sub-processor (a) is allocated to one of the physical processors (1) and (2) to perform data processing in a time sharing manner. As previously discussed, the portion of the area of the I/O port and the local storage area are mapped to the logical partition address space of the guest OS. The guest OS can thus access the logical sub-processor (a) and the resources thereof. If the logical sub-processor (a) is allocated to none of the physical processors (1) and (2) in a time sharing manner, and data processing is not performed, the portion of the area of the I/O port and the local storage area are not mapped to the logical partition address space corresponding to the guest OS.

In accordance with the present invention, the guest OS issues the system call to the control OS. The logical sub-processor (a) is set to be in the inactive state, namely, is excluded from the time sharing candidate. The context is stored, and the context table is mapped to the logical partition address space corresponding to the guest OS. The logical sub-processor (a) 701 of Fig. 11 stores the context the guest OS can reference.

During time slot from t1 through t2 as shown in Fig. 11, the logical sub-processor (a) is set to be in the inactive state. The context of the logical sub-processor (a) is mapped to the logical partition address space corresponding to the guest OS in a manner that allows the context to be referenced by the guest OS. At time t1, the guest OS outputs the system call to the control OS, the logical sub-processor (a) is shifted from the active state to the inactive state, and the context is mapped to the logical partition address space corresponding to the guest OS. At time t2, the guest OS issues the system call to the control OS to shift the logical sub-processor (a) from the inactive state to the active state.

In the known technique, the context of the logical sub-processor is not referenced during a period throughout which the logical sub-processor is not allocated to the physical processor and accessing of an OS to a logical sub-processor triggers an error. More specifically, a known apparatus needs to wait for next timing at which the logical sub-processor (a) is allocated to one of the physical processors (1) and (2). In contrast, in accordance with the embodiment of the present invention, accessing to the logical sub-processor is performed without the need for waiting for an allocation timing of the logical sub-processor to the physical processor.

Fig. 12 illustrates an embodiment of the present invention that permits a program to be immediately executed. In accordance with this embodiment, the logical sub-processor is set to be in the inactive state. During a context reference enabled period, the program and a program start request are issued to the logical sub-processor. When the logical sub-processor is allocated to the physical processor, the physical processor is used.

At time t1, the guest OS issues a system call to the control OS. The logical sub-processor (a) is set to be in the inactive state, in other words, is excluded from the time sharing candidate, the context is stored, and the context is mapped to the logical partition address space corresponding to the guest OS. During time slot from tl-t2 as shown in Fig. 12, the guest OS can reference the context from the logical partition address space corresponding to the guest OS, namely, can access the logical sub-processor (a) 701.

During time slot from t1 through t2, the guest OS transmits a data processing program to the logical sub-processor (a) and then outputs a start request to the logical sub-processor (a). More specifically, the guest OS performs a load process of program data to the local storage area of the logical sub-processor (a) recorded on the context table. Subsequent to the end of the process, the guest OS issues a system call to the control OS at time t2. The logical sub-processor is shifted from the inactive state to the active state. During the use of the physical processor at the next time sharing timing, the logical sub-processor (a) immediately executes the program loaded onto the local storage area.

In the known technique, the context of the logical sub-processor cannot be referenced within a period throughout which the logical sub-processor is not allocated to the physical processor and accessing of the logical sub-processor to the local storage area triggers an error. More specifically, the program load process cannot be performed until the next timing at which the logical sub-processor (a) is allocated to one of the physical processors (1) and (2). The program execution timing is thus delayed, and data processing efficiency is lowered. In contrast, the present invention improves data processing efficiency.

The present invention has been described with reference to particular embodiments. Modifications and changes of the embodiments within the scope of the present invention are apparent to those skilled in the art. The embodiments of the present invention have been discussed for exemplary purposes only, and are not intended to limit the scope of the invention. The scope of the invention is limited by the appended claims only.

The above-references series of steps can be performed using software, hardware, or a combination thereof. If the series of steps is performed using software, a program forming the software is installed from a recording medium or via a network onto a computer incorporated in a hardware structure or to a general-purpose computer performing a variety of programs, for example.

The program can be recorded beforehand onto one of a hard disk and a ROM (read-only memory) as a recording medium. The program can also be recorded on a removable recording media temporarily or permanently. The recording media includes a floppy disk, a CD-ROM (compact disk read-only memory), a MO (magneto-optic) disk, a DVD (digital versatile disk), a magnetic disk, a semiconductor memory, etc. Such a removable medium can be supplied in package software.

The program can be installed from the removable recording medium to the computer. The program can be transmitted in- a wireless fashion to the computer from a download site. The program can also be transmitted in a wired fashion via a network such as one of a LAN (local area network) and the Internet. The program is then received by the computer and installed onto a recording medium such as a hard disk in the computer.

The process steps discussed in this specification are sequentially performed in the time series order as stated. Alternatively, the steps may be performed in parallel or separately. In this specification, the system refers to a logical system composed of a plurality of apparatuses, and the elements of each apparatus are not necessarily contained in the same casing.

### Industrial Applicability

The information processing apparatus processes data by allocating the plurality of logical processors to the physical processor in a time sharing manner, and stores the context of the logical processor with no physical processor allocated thereto, with the context mapped to a logical partition address space of the logical partition to which the logical processor is applied. The context of the logical processor can be acquired, even with the logical processor not allocated to the physical processor. Processes to the logical processor, including accessing and program loading, can be executed without waiting until the logical processor is allocated to the physical processor. Data processing efficiency is thus substantially increased.

In accordance with embodiments of the present invention, in addition to the content of registers, a context table stores contents, not stored in a known context table, such as contents of a local storage area and an I/O port. The guest OS references the content of the register, the content of the local storage, and the content of the input-output port as a variety of information corresponding to the logical processor set in the inactive state corresponding to the physical processor in a non-usable state. The guest OS thus processes data in accordance with resource access responsive to the information. The data processing efficiency is thus heightened.

## Claims

1. An information processing apparatus for processing data by allocating a plurality of logical processors to a physical processor in a time sharing manner, comprising a context management unit mapping a context of a logical processor with no physical processor allocated thereto, to a logical partition address space of a logical partition to which the logical processor is applied, and then storing the context of the logical processor.

2. The information processing apparatus according to claim 1, comprising
a control OS allocating the plurality of logical processors to the physical processor in a time sharing manner, and
a guest OS with the logical partition associated therewith, and with the logical processor being applied to the logical partition,
wherein the control OS maps the context of the logical processor, which is applied to the guest OS associated logical partition, to a logical partition address space of the guest OS associated logical partition and then stores the context of the logical processor, based on a system call from the guest OS to the control OS.

3. The information processing apparatus according to claim 2, wherein the control OS excludes the logical processor, which is applied to the guest OS associated logical partition, from the time sharing process as an allocation candidate to the physical processor based on the system call from the guest OS to the control OS, maps the context of the logical processor to the logical partition address space, and then stores the context of the logical processor.

4. The information processing apparatus according to claim 2, wherein the control OS switches between an active state for allocating the logical processor to the physical processor and an inactive state for not allocating the logical processor to the physical processor and wherein based on the system call from the guest OS to the control OS, the control OS sets the guest OS applied logical processor to be in the inactive state, maps the context of the logical processor to the logical partition address space, and then stores the context of the logical processor.

5. The information processing apparatus according to claim 4, wherein the control OS restores the logical processor back to an allocation candidate to be allocated to the physical processor by resetting the guest OS applied logical processor to the active state from the inactive state based on the system call from the guest OS to the control OS.

6. The information processing apparatus according to claim 1, wherein the context management unit performs storage of the context of the logical processor based on at least one of a register of the logical processor, an I/O port, and a local storage.

7. A process control method for processing data by allocating a plurality of logical processors to a physical processor in a time sharing manner, comprising
a logical processor scheduling step of excluding a logical processor from an allocation candidate to be allocated to the physical processor and
a context storage step of mapping a context of the logical processor, excluded as a candidate to be allocated to the physical processor, to a logical partition address space of a logical partition to which the logical processor is applied, and then storing the context of the logical processor.

8. The process control method according to claim 7, further comprising a system call output step of outputting a system call from the guest OS to the control OS,
wherein the logical processor scheduling step includes excluding the logical processor as an allocation candidate to be allocated to the physical processor based on the system call, and
wherein the context storage step includes mapping the context of the logical processor, which is applied to the logical partition with the guest OS associated therewith, based on the system call, to the logical partition address space with the guest OS associated therewith, and then storing the context of the logical processor.

9. The process control method according to claim 8, wherein the control OS switches between an active state for allocating the logical processor to the physical processor and an inactive state for not allocating the logical processor to the physical processor and wherein based on the system call from the guest OS to the control OS, the control OS sets the guest OS applied logical processor to be in the inactive state, maps the context of the logical processor to the logical partition address space, and then stores the context of the logical processor.

10. The process control method according to claim 9, wherein the control OS restores the logical processor back to an allocation candidate to be allocated to the physical processor by resetting the guest OS applied logical processor to the active state from the inactive state based on the system call from the guest OS to the control OS.

11. A computer program for performing a process control method of processing data by allocating a plurality of logical processors to a physical processor in a time sharing manner, comprising
a logical processor scheduling step of excluding a logical processor from an allocation candidate to be allocated to the physical processor and
a context storage step of mapping a context of the logical processor, excluded as a candidate to be allocated to the physical processor, to a logical partition address space of a logical partition to which the logical processor is applied, and then storing the context of the logical processor.

## Amended claims

### Amended claims under Art. 19.1 PCT

**1.** (Amended) An information processing apparatus, having a first physical processor and a plurality of second physical processors, for processing data by allocating a plurality of logical processors to the plurality of second physical processors in a time sharing manner, the information processing apparatus comprising a context management unit, the context management unit mapping a context for a logical processor having no physical processor allocated thereto, to a logical partition address space of a logical partition to which the logical processor is applied, storing the mapped context, and notifying the logical processor of an access address of the context, and
the logical processor accessing the context using the access address.

**2.** (Amended) The information processing apparatus according to claim 1, comprising:
a control operating system allocating the plurality of logical processors to the second physical processor in a time sharing manner, and
a guest operating system associated with the logical partition to which the logical processor is applied,
wherein based on a system call from the guest operating system to the control operating system, the control operating system maps the context for the logical processor of the guest operating system associated logical partition to the logical partition address space of the guest operating system associated logical partition and stores the mapped context.

**3.** (Amended) The information processing apparatus according to claim 2, wherein based on the system call from the guest operating system to the control operating system, the control operating system excludes the logical processor to which the guest operating system associated logical partition is applied, from the time sharing process as an allocation target to be allocated the second physical processor, maps the context for the logical processor to the logical partition address space, and stores the mapped context.

**4.** The information processing apparatus according to claim 2, wherein the control operating system switches between an active state for allocating the logical processor to the physical processor and an inactive state for not allocating the logical processor to the physical processor, and wherein the control operating system sets the guest operating system applied logical processor to be in inactive state, maps the context of the logical processor to the logical partition address space, and stores the context, based on the system call from the guest operating system to the control operating system.

**5.** The information processing apparatus according to claim 4, wherein the control operating system restores the logical processor back to an allocation candidate to be allocated to the physical processor with the guest operating system applied logical processor reset to the active state from the inactive state based on the system call from the guest operating system to the control operating system.

**6.** The information processing apparatus according to claim 1, wherein the context management unit stores the context of the logical processor in at least one of a register of the logical processor, an input-output port, and a local storage.

**7.** (Amended) A process control method of an information processing apparatus, having a first physical processor and a plurality of second physical processors, for processing data by allocating a plurality of logical processors to the plurality of second physical processors in a time sharing manner, comprising:
a logical processor scheduling step of scheduling the logical processor to exclude the logical processor from an allocation candidate to be allocated to the second physical processor;
a context storage step of mapping a context for the logical processor excluded as an allocation candidate to be allocated to the second physical processor to a logical partition address space of a logical partition to which the logical processor is applied, storing the mapped context, and notifying the logical processor of an access address of the context; and
a step of accessing the context with the access address in the logical processor.

**8.** (Amended) The process control method according to claim 7, further comprising a system call output step of outputting a system call from the guest operating system to the control operating system,
wherein the logical processor scheduling step includes excluding the logical processor as an allocation candidate to be allocated to the second physical processor based on the system call; and
wherein the context storage step includes mapping the context for the logical processor to which the logical partition with the guest operating system associated therewith is applied, to the logical partition address space with the guest operating system associated therewith, based on the system call, and storing the mapped context.

**9.** (Amended) The process control method according to claim 8, wherein the control operating system switches between an active state for allocating the logical processor to the second physical processor and an inactive state for not allocating the logical processor to the second physical processor, and
wherein based on the system call from the guest operating system to the control operating system, the control operating system sets the guest operating system applied logical processor to be in inactive state, maps the context for the logical processor to the logical partition address space, and stores the mapped context.

**10.** (Amended) The process control method according to claim 9, wherein the control operating system restores the logical processor back to an allocation candidate to be allocated to the second physical processor with the guest operating system applied logical processor reset to the active state from the inactive state based on the system call from the guest operating system to the control operating system.

**11.** (Amended) A computer program for causing a computer to perform a process control method in an apparatus, having a first physical processor and a plurality of second physical processors, for processing data by allocating a plurality of logical processors to the plurality of second physical processors in a time sharing manner, comprising:
a logical processor scheduling step of scheduling the logical processor to exclude the logical processor from an allocation candidate to be allocated to the second physical processor;
a context storage step of mapping a context for the logical processor excluded as an allocation candidate to be allocated to the second physical processor to a logical partition address space of a logical partition to which the logical processor is applied, storing the mapped context, and notifying the logical processor of an access address of the context; and
a step of accessing the context with the access address in the logical processor.

Statement under Art. 19.1 PCT
Amendments of Claims 1, 7, and 11 are intended to clarifies that the main processor is a first physical processor, that the sub processor is a second physical processor, and that even when the logical processor is not allocated to the second physical processor (sub processor), the logical processor is allowed to access a context using an access address of the context. To assure consistency of the amendments of these independent claims with other claims, dependent claims 2, 3, 8, 9 and 10 are also amended.

The content of the amendments is described in paragraph [0035], page 9, paragraphs [0041] and [0042], page 10, and paragraphs [0085] and [0086], page 19 in the description.
 (2) Difference from cited references

In the international search report, reference 1: JP07-271738 states a multiplexing of virtual processors and physical processors, and context switching between the virtual processors, reference 2: JP2004-259106 states a switching operation of a plurality of OS's and a register saving operation, and reference 3: US6751737 states context switching process requiring small overhead.

None of the above references states the arrangement that "in order to access a logical processor for a period during which the logical processor does not use a physical processor, a context table containing an I/O port area and a local storage area is maintained in a state that permits another processor to reference the context table."

With this unique feature of the claimed present invention, a process such as reading a context to be executed by the logical processor can be executed without the need for waiting until the logical processor is allocated to the physical processor. Such a process is efficiently performed, leading to high data processing efficiency.
